Europäisches Patentamt

European Patent Office

Office européen des brevets

(19)

(11) **EP 0 694 836 B1**

(12) **EUROPEAN PATENT SPECIFICATION**

(45) Date of publication and mention
of the grant of the patent:
**22.03.2000 Bulletin 2000/12**

(51) Int Cl.⁷: **G06F 9/44**

(21) Application number: **95650023.5**

(22) Date of filing: **04.07.1995**

(54) **A system and method for case-based reasoning**

System und Methode für fall-basiertes Schlie en

Système et méthode de raisonnement fondé sur des cas

(84) Designated Contracting States:
**DE FR GB IE NL**

(30) Priority: **28.07.1994 IE 940602**

(43) Date of publication of application:
**31.01.1996 Bulletin 1996/05**

(73) Proprietors:
• **HITACHI EUROPE LIMITED**
**Maidenhead, Berkshire, SL6 8YA (GB)**
• **The Provost Fellows and Scholars of the College**
**of the Holy and Undivided Trinity of Queen**
**Elizabeth Near Dublin**
**Dublin 2 (IE)**

(72) Inventors:
• **Smyth, Barry**
**Dublin 16 (IE)**
• **Cunningham, Padraig**
**Dublin 4 (IE)**

(74) Representative: **O'Connor, Donal Henry et al**
**c/o Cruickshank & Co.,**
**1 Holles Street**
**Dublin 2 (IE)**

(56) References cited:
• **IJCAI-93. PROCEEDINGS OF THE THIRTEENTH**
**INTERNATIONAL JOINT CONFERENCE ON**
**ARTIFICIAL INTELLIGENCE , CHAMBERY,**
**FRANCE, 28 AUG.-3 SEPT. 1993, 1993, SAN**
**MATEO, CA, USA, MORGAN KAUFMANN**
**PUBLISHERS, USA, pages 1325-1330 vol.2,**
**EVETT M P ET AL 'Massively parallel support for**
**efficient knowledge representation'**

• **LES APPLICATIONS DES ENSEMBLES FLOUS**
**(APPLICATIONS OF FUZZY SETS), NIMES,**
**FRANCE, 2-3 NOV. 1992, 1992, NANTERRE**
**CEDEX, FRANCE, EC2, FRANCE, pages 335-342,**
**SALOTTI S 'Filtrage flou sur des objets pour**
**raisonner par analogie : le système FLORAN'**
• **ARTIFICIAL INTELLIGENCE IN DESIGN '91,**
**EDINBURGH, UK, 25-27 JUNE 1991, ISBN**
**0-7506-1188-X, 1991, OXFORD, UK,**
**BUTTERWORTH-HEINEMANN, UK, pages**
**137-150, MAHER M L ET AL 'CADSYN: using**
**case and decomposition knowledge for design**
**synthesis'**
• **PROCEEDINGS ICCI '93. FIFTH**
**INTERNATIONAL CONFERENCE ON**
**COMPUTING AND INFORMATION (CAT.**
**NO.93TH0563-7), PROCEEDINGS OF ICCI'93:**
**5TH INTERNATIONAL CONFERENCE ON**
**COMPUTING AND INFORMATION, SUDBURY,**
**ONT., CANADA, 27-29 MAY 1993, ISBN**
**0-8186-4212-2, 1993, LOS ALAMITOS, CA, USA,**
**IEEE COMPUT. SOC. PRESS, USA, pages**
**310-315, DELISLE S ET AL 'Pattern matching for**
**case analysis: a computational definition of**
**closeness'**
• **APPLICATIONS OF FUZZY LOGIC**
**TECHNOLOGY, BOSTON, MA, USA, 8-10 SEPT.**
**1993, vol. 2061, ISSN 0277-786X, PROCEEDINGS**
**OF THE SPIE - THE INTERNATIONAL SOCIETY**
**FOR OPTICAL ENGINEERING, 1993, USA, pages**
**198-202, LIROV Y 'Recycling troubleshooting**
**experience with fuzzy logic'**

EP 0 694 836 B1

## Description

The invention relates to a case base system having a case base comprising case records, a processing means and an interface for interfacing between the external environment and the processing means. The invention relates particularly to the retrieval of a closest case in such a system.

In some such case base systems, such as described in US 5,317,677, WO 92/15951 and EP 477490, there is a pre-stored decision structure, alternatively referred to as a rule base, or knowledge means. Such a structure is generally of hierarchial configuration. WO 93/22732, for example, describes how such a decision structure is generated. The rules at the nodes of such a structure are pre-determined so that the decision structure is capable of handling all envisaged problems to be presented to the system before the system is used. The processing means - in one example referred to as an heuristic search unit - controls a search of the case and rule memories for cases and rules which relate to the target problem. For each target problem, it is necessary to search through all levels of the decision structure, at each level prompting input of a feature value from the external environment in order to "move" to the next node.

Because such case base systems comprise pre-stored decision structures, they have a large memory requirement and are of necessity quite complex. Further, it is necessary every time to progress through every level of the decision structure, each level causing:-

(a) the necessity for the processing means to carry out various processing operations; and

(b) the necessity for further feature value inputs to be received from the external environment.

Where the target problem is complex, the fact that each level must be processed as outlined in (a) above can result in a relatively long response time of the system. Further, some of the feature values which will be required from the external environment will as outlined in (b) above be difficult or "expensive" to obtain. For example, if the target problem is the location of a fault in an electrical circuit, it will be necessary to carry out complex testing operations to obtain some feature values such as operational characteristics of components within a circuit module.

Another case base system of the prior art is described in British Patent Specification No. GB 2,241,093A. In this system, there is a stored causal model database. This database is used in an iterative manner by a processor to determine whether retrieved cases are justifiably relevant to the new problem. It therefore relates primarily to post-case retrieval operations.

In PCT Patent Specification No. WO 93/22732, a system is described in which quantitative and qualitative case record data is used to generate knowledge trees comprising child clusters of case bases. Again, it appears that there would be a relatively high processing power requirement and further, a relatively large number of feature value inputs would be required.

In document "Les applications des ensembles flous (applications of fuzzy sets), Nimes, France, 2-3 Nov. 1992, 1992, Nanterre Cedex, France, EC2, France, pages 335-342, Salotti S., 'Filtrage flou sur des objets pour raisonner par analogie : le système FLORAN'" a case base system is described where an alternating sequence of fuzzy filtering and data input for the most discriminating features is used. The most discriminating features are determined together with their relative importance and at the same time a candidate set of reference cases to be compared with the given input case is selected.
The compatibility between the reference cases in the candidate set and the given input case is determined by fuzzy filtering to arrive at a solution for the given case.

The invention is directed towards providing a case base system which has underlying technical processing features which provide for a requirement for fewer feature value inputs from the external environment.

Another objective is that the processing means operate to provide a fast response time in retrieval of an appropriate solution.

According to the invention, there is provided a case base system comprising a case base of stored case records associated with cases, a processing means, and an interface for communication with an external environment, characterised in that,

each case record has a memory structure comprising an address, a set of feature values, and a solution;

said processing means comprises means for automatically performing pattern matching operations between feature values and solutions of case records in a candidate set to determine a most discriminating feature for which the values correlate most closely with the solutions;

said processing means comprises means for :-

interactively transmitting feedback signals requesting the interface to receive a value of said most discriminating feature,

receiving a value for said feature in a target problem from the interface, and

comparing the received value with values for said feature in the candidate set of case records to generate a next candidate set of reduced size;

said processing means comprises means for repeating the automatic pattern matching and the interactive feedback operations to generate a candidate set in which all case records have the same solution, and for retrieving one of said case records and outputting its solution at the interface.

In one embodiment, each case record includes at least one feature value addressable as a free feature value, and the processing means comprises a case filter comprising means for:-

at the start of a case retrieval process, automatically directing the interface to receive values for free features; and

generating an initial candidate set of cases by comparing received free feature values with the stored values in the case records and eliminating case records having incompatible free feature values.

Preferably, the case record free feature values are addressable as such by their location in memory cells which are pre-defined for that function.

In one embodiment, the processing means comprises means for including a case record in a candidate set if it has a non-specific value for a feature for which a value has been received at the interface, and is otherwise compatible.

In another embodiment, the solutions of all case records are at a similar level of granularity whereby they correlate directly with each other in target problems.

In a further embodiment, the case records are stored in a memory table structure, in which the record key is associated with the case address, the feature values, or the solution.

Preferably, the system comprises a plurality of stored memory table structures, case records being common to a plurality of structures and having different keys in different structures.

In another embodiment, the processing means comprises means for setting up registers in memory and for directing storage in the registers of count values representing pattern matching correlations between solutions and feature values.

In one embodiment, the correlations are generated according to programs implementing information theoretic statistical algorithms, whereby case records are grouped according to common feature and solution characteristics.

According to another aspect, the invention provides an automatic fault diagnosis system comprising a case base system as described above and wherein the interface comprises a bank of automatic sensors and associated controllers.

In a further aspect, the invention provides a process for retrieving an appropriate case for a target problem from a case base system comprising a case base of stored case records, associated with cases, a processing means, and an interface for communication with an external environment, each case record having a memory structure comprising an address, a set of feature values, and a solution, the method comprising the steps of:-

the processing means automatically performing pattern matching operations between feature values and solutions of case records in a candidate set to determine a most discriminating feature for which the values correlate most closely with the solutions;

the processing means interactively providing feedback by transmitting feedback signals requesting the interface to receive a value in the target problem of said most discriminating feature, receiving a value for said feature from the interface, and comparing the received value with values for said feature in the candidate set of case records to generate a next candidate set of reduced size;

said processing means repeating the automatic pattern matching and the interactive feedback operations to generate a candidate set in which all case records have the same solution, retrieving one of said case records, and outputting its solution at the interface.

Preferably, each case includes at least one feature value addressable as a free feature value, and the processing means initially carries out case filtering of the case base by carrying out the steps of:-

automatically directing the interface to receive values for free features; and

generating an initial candidate set of cases by comparing received free feature values with the stored values in the case records, and eliminating case records having incompatible free feature values.

In one embodiment, the case record free feature values are addressed by reading from memory cells which are pre-defined for that function.

Preferably, the interactive feedback step comprises the sub-step of comparing the received value with values in the candidate set of case records and generating a next candidate set of reduced size by including case records in the next candidate set if the case record has a non-specific value for said feature and is otherwise compatible.

In one embodiment, the solutions of all case records are at a similar level of granularity whereby they collate directly with each other in target problems.

Preferably, the case records are stored in a memory table structure in which the record key is associated with the case address, the feature values or the solution. In this embodiment, there may be a plurality of stored memory hash table structures, case records being common to a plurality of structures and having different keys in different structures.

In one embodiment, the automatic pattern matching step comprises the sub-steps of setting up registers in memory and directing storage in the registers of count values representing pattern matching correlations between solutions and feature values.

In another embodiment, the correlations are generated according to programs implementing information theoretic statistical algorithms, whereby case records are grouped according to common feature and solution characteristics.

The invention will be more clearly understood from the following description from embodiments thereof, given by way of example only with reference to the accompanying drawings on which:-

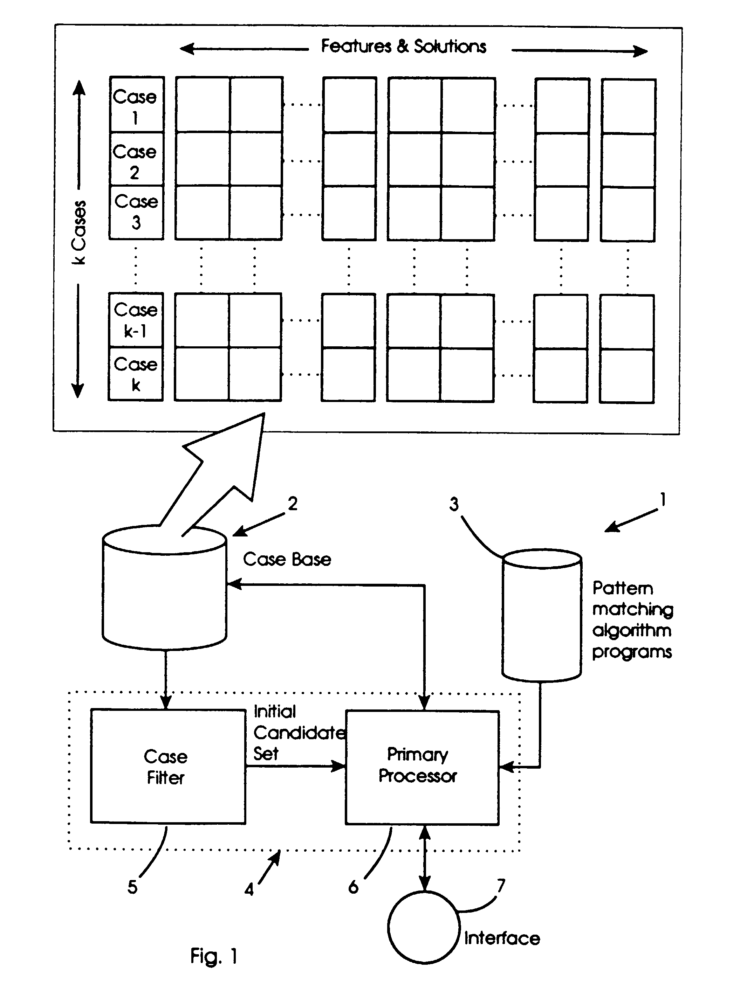

Fig. 1 is a diagrammatic representation of a case base system of the invention;

Figs. 2a and 2b are diagrams representing the manner in which case records are stored;

Fig. 3 is a diagrammatic representation of a case record table secondary structure used in the pattern matching operations of the system;

Fig. 4 is a flowchart illustrating operation of the system in more detail; and

Fig. 5 is a diagram illustrating performance of the system in automatic fault diagnosis of a power supply circuit illustrated in Fig. 6.

Referring to the drawings, there is shown a case base system of the invention, indicated generally by the reference numeral 1. The system 1 is for providing an appropriate retrieved case for a target problem. The solution of the case may be a full solution which is required for the target problem, or alternatively it may be an approximation to be used for further processing and modification. An example of the target problem for which the system 1 may be used is fault diagnosis in an electronic unit such as a switching mode power supply. Inputs to the system 1 assist in retrieval of the appropriate case and include values of features of the power supply. Some of these features are easily available, whereas others require testing to be determined.

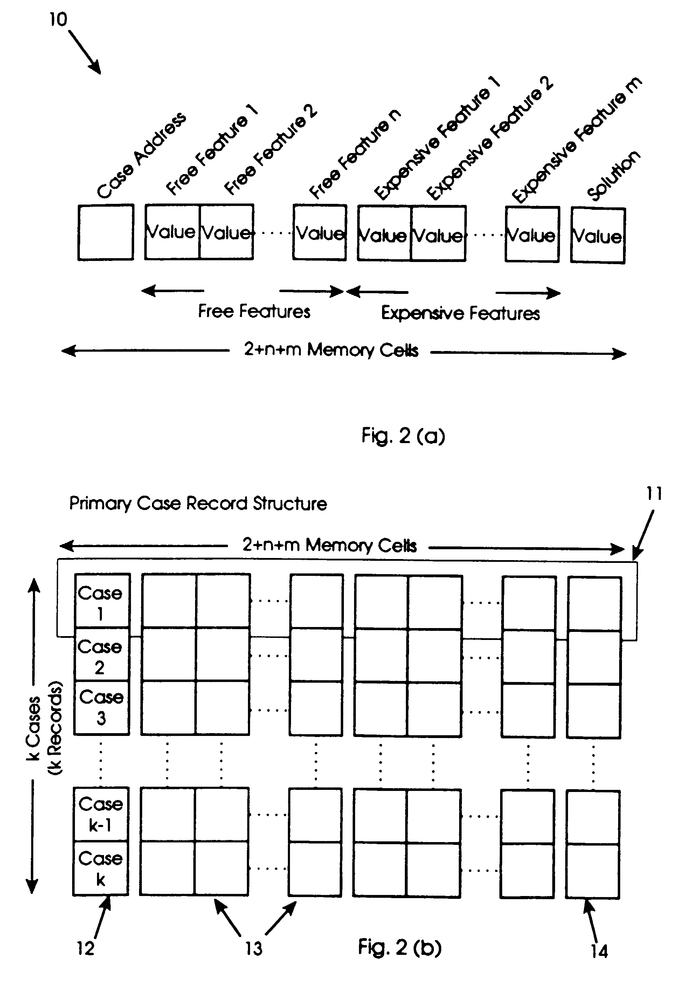

The system 1 comprises a case base 2 comprising a case record 10 for each case. Each case record 10 comprises an address, a number of values of features, and a solution. As shown in Fig. 2(b), there are k case records. The system 1 further comprises a set of pattern matching algorithm programs 3, operation of which is described in more detail below. There is a processor 4 comprising a case filter 5 and a primary processor 6. The processor 4 is typically a microprocessor circuit of a workstation operating according to case retrieval programs and the pattern matching algorithm programs 3. In more detail, the processor 4 is that of a Sun SPARC 2™ workstation, the programming language being COMMON LISP.

The system 1 also comprises an interface 7 which in this embodiment is a bank of automatic sensors connected in a power supply circuit, and associated sensor controllers. These measure parameters such as voltage, current, temperature, time responses, impedance, and capacitance and are connected to serial ports. The interface 7 also has comprises a display screen. However, it is envisaged that different sensors may be used for capturing data, and indeed the interface 7 may comprise a keyboard for manual data input in response to displayed prompts.

An individual case record 10 is represented in Fig. 2a in the manner whereby it is stored in a primary case record structure, shown in Fig. 2b. The primary case record structure is a hash table in which the case address is the key for access to the case record. The case address is stored in one cell of the case record, the cell in this case being two bytes of memory.

There is a pre-set group of cells (n + m) storing values for features relevant to the case. The first n cells store values for features which are defined as free features. Free features are those for which values are very easily obtained and are usually available at the start of a case retrieval process. In a circuit test target problem, such features may be the identity of the target circuit, the voltage at which it operates, or the number of output pins. Values for these features are immediately available to the operator. The next m cells store values for expensive features. Expensive features are those for which values are not readily available and for which time and effort is required in the external environment to determine their values. An example of an expensive feature is the response of a particular module in a circuit to a particular type of signal. To determine the value of such an expensive feature, it is necessary to carry out testing operations. It is desirable to minimise the amount of such work required.

The last cell in the case record is a solution cell storing the solution relevant to the particular case. An important aspect of the invention is the fact that the solution stored in this cell is at a particular granularity, this granularity being common to the solutions of all of the case records in the case base 2. For example, in a case base system relating to testing, the solutions will all be at the module level, for example. Another, different case base system may have cases in which the solutions all relate to components within modules of systems. Thus, it is envisaged that a number of case base systems of the invention may be required if the level of detail of a retrieved case is to be very specific.

In the primary case record structure 11 shown in Fig. 2(b), the case records 10 are stored in a hash table structure in which the key for each record is the case address. These keys are stored in a column 12 of the table 11. The case address keys provide access to the feature cells stored in columns 13 of the structure 11. The solution cells are stored in a column 14. In this embodiment, the primary record case structure has the dimensions of (2 + n + m) x k cells, in which each cell is two bytes. However, the cells may be of any other appropriate size.

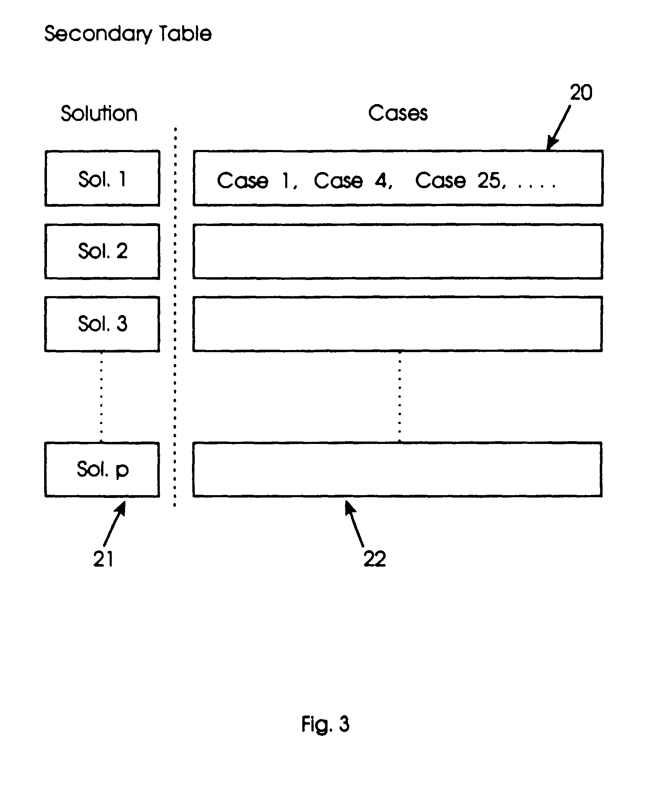

In addition, the case base 2 stores secondary structures which store case records or parts thereof in a manner suitable for assisting in providing a fast response time in processing. In particular, the primary processor 6 must carry out pattern matching operations which are quite complex and a secondary table 20 shown in Fig. 3 is of major benefit in providing a good response time. The secondary structure 20 has the same structural principles as the primary case structure 11. In this structure, however, the keys are the solutions arranged in a first column 21 of cells, the total number of solutions being p. The cells which are associated with each key in the column 21 include the addresses of cases which have that solution. For example, solution 1 is associated with cases 1, 4 and 25 *inter-alia*. The primary case record structure 11 is also used for processing in this general manner, the key being case address.

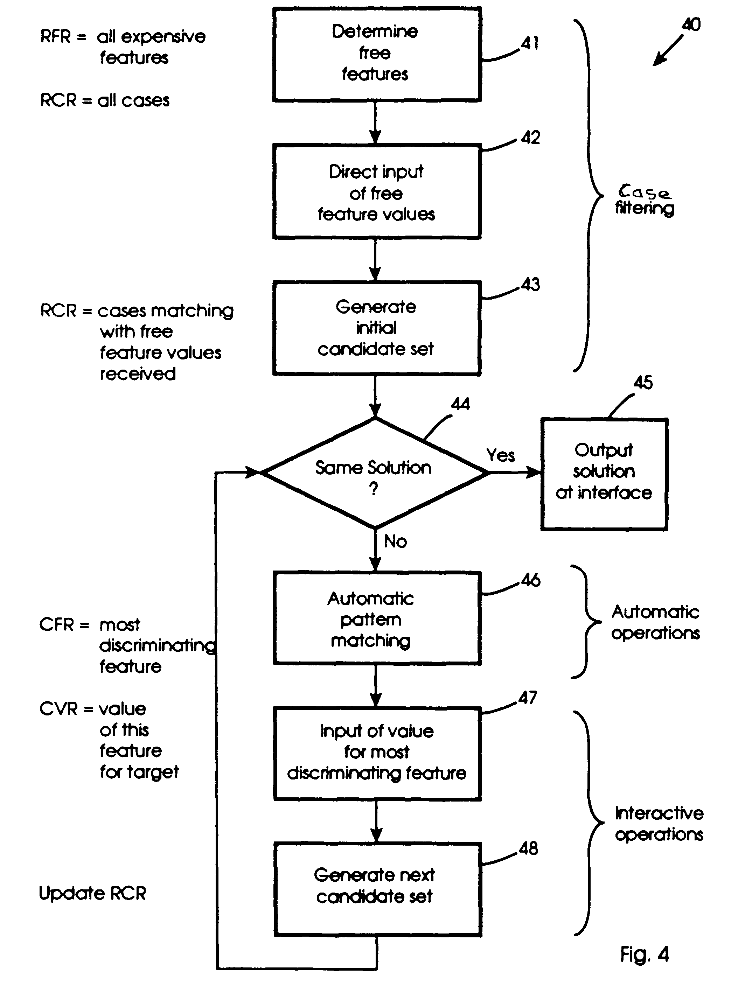

Referring now to Fig. 4, operation of the processor 4 to retrieve the most appropriate case is now described in more detail. Before starting processing, the primary processor 6 sets in read/write memory values for various registers. These registers are as follows:-

CFR - current feature register,

CVR - current value register,

RCR - remaining cases register, and

RFR - remaining features register.

The process for retrieval of appropriate cases is indicated generally by the numeral 40 and in the first step, 41, the case filter 5 determines free features which have been set in construction of the case base 2. These are the features for which values are provided in the relevant cells of the primary case record structure 11. The RFR register is then set to include the identifier of all expensive features. The register RCR is set to include all cases 1 to k. In step 42, the case filter 5 directs the interface 7 to receive inputs of values for the identified free features. This involves activating the monitoring ports for reception of values from the sensors. In step 43, the case filter 5 automatically generates an initial candidate set of case records 10 by eliminating those case records 10 which are incompatible with the received free feature values. In doing this, the case filter 5 includes in the candidate set case records 10 which are not specific in some free feature value cells. For example, if case record 9 does not include any value in the cell 3 (relating to the second free feature) it is included in the initial candidate set, provided it is compatible in other ways. In other words, the initial candidate set includes all case records which could still possibly relate to the target problem. After generation of the initial candidate set in step 43, the case filter 5 sets the RCR register to include the identifiers of all cases of the candidate set. As the processing continues, the number of identifiers in the RCR register decreases.

After generation of the initial candidate set in step 43, the primary processor 6 takes over and it determines in the decision step 44 if the case records of the initial candidate set all have the same solution. If so, this is the desired solution for the target problem and one of the cases is retrieved and the solution is outputted at the interface 7 in step 45. Once the solution has been outputted, it may be used in any desired way by the operator. For example, it may be used for further modification automatically, or it may be used as the basis for "manual" target problem solving work.

If there are a number of solutions in the candidate set, in step 46 the primary processor 6 carries out automatic pattern matching operations to determine the most discriminating feature of the candidate set. These steps are carried out automatically without user interaction. The basis of the pattern matching operations is to correlate feature values of the case records in the candidate set with their solutions and to determine which feature appears to affect the solution most. To do this, the primary processor 6 uses information theoretic criteria algorithm programs retrieved from the storage device 3.

Let $|D_i|$ represent the number of cases with solution or diagnosis $D_i$. Then the expected information content is given by :-

$$I(|D_1|,...,|D_d|) = -\sum_{i=1}^{d}\left(\frac{|D_i|}{|D_1|+...+|D_d|} \bullet \log_2\left[\frac{|D_i|}{|D_1|+...+|D_d|}\right]\right)$$

Assume there is testing of the feature $f \in F$ and this feature has possible values $V=\{v_1,...,v_n\}$. Then V partitions a candidate set C into n groups G of cases, $g_1,...,g_n$; where $g_i$ contains those cases that have value $v_i$ for feature f. Let $G_i$ contain $|D_j^i|$ cases with diagnosis $D_j$, that is $|D_j^i|$ instances of class $D_j$. The expected information for f as a root is computed by determining the feature information content of f E(f) as follows:-

$$E(f) = \sum_{i=1}^{n}\left(\frac{|D_1^i|+...+|D_d^i|}{|D_1|+...+|D_d|}\right) \bullet I(|D_1^i|,...,|D_d^i|)$$

The weight of the *i*th branch is the proportion of cases in C that belong to $g_i$.

The information gained from using f, or the discriminatory power of f, is given by the equation :-

$$DP(f) = I(|D_1|,...,|D_d|) - E(f)$$

These pattern matching operations to identify the most discriminating feature are implemented by COMMON LISP programs 3. This language was chosen as it is effective at performing list operations and generalised pattern matching functions.

These algorithms represent information theoretic criteria to determine the feature with the most discriminating power, whereby case records are grouped as described above according to common feature and solution characteristics. However, it will be appreciated that any other type of algorithm may be used. The important point is that pattern matching operations of a desired nature are carried out to correlate the feature values with solutions of case records in the candidate set in order to determine the most discriminating feature. It is also important that these operations are carried out automatically by the primary processor 6.

In step 47, the interface 7 receives a value for the most discriminating feature. Generally, some work will be required of equipment in the interface 7 under automatic control of the system 1 to determine such a value. In step 48, the primary processor generates a next candidate set, using similar operations to those which are carried out in step 43. The exception being that cells n + 1 to 1 + n + m, which relate to expensive features are used. When the most discriminating feature at any stage is identified, the register CFR is set to this feature and the register CVR is set to the value of this feature after it has been received. When the next candidate set is generated in step 48, the register RCR is updated as appropriate.

The automatic pattern matching operation 46 and the interactive operations 47 and 48 are repeated in cycles until all case records of the candidate set have the same solution, in which case this solution is outputted as indicated by the step 45.

The following is a set of sample screen displays for a case base system of the invention, in which signals representing expensive features are received from an operator. This example is chosen because feedback is displayed and inputs keyed into the system - and may therefore be represented by way of the following screened displays.

Selecting function test failure cases: Retrieved 14

>(INPUT-FILTER-1 LOCAL-PS-1 DRIVER&PS-1 CONTROL-CCT-1 CLOCK-GEN-1 CLOCK-GEN=2 CLOCK-GEN-3 DRIVER&PS-2 DRIVER&PS-3 XFMR-1 XFMR-2 XFMR-3 OUTPUT-RECT-1 OUTPUT-RECT-1)

What is the value for N2? G
What is the value for N3? G
What is the value for N10? G
What is the value for N7? G
What is the value for N8? G
What is the value for N5? G
O.K......

Selecting candidate modules: Retrieved 2 (CLOCK-GEN-1 CLOCK-GEN-2)
Validation:
The fault is in CLOCK-GENERATOR if N6 is B or N6 is G.

It will be appreciated that in the invention there is no need for pre-stored decision trees or rule bases. The invention is therefore a radical departure from the established convention that decision structures such as hierarchial decision trees are necessary. By virtue of the particular memory structures for the case base and of the combined automatic and interactive operation of the processor 4, the system 1 operates in real time to provide the appropriate solution. The response time is generally quicker than for prior case base systems and further, there generally is a need for fewer expensive feature values to be inputted. For example, in a case base system which has a stored decision structure, each layer of that structure must be processed in turn. If such a structure has, say, seven levels, it could be that the third and sixth levels are not essential to retrieve the appropriate solution. In the invention, the values for these two levels would not be requested. One reason is that the system initially reduces the candidate set by reception of all free features. By doing this, the invention provides a very simple method for using all free features at an early stage, thus creating the smallest possible initial candidate set and possibly eliminating the need for an expensive feature value input down-stream. The number of required expensive feature values is also reduced because the system operates according to the particular target problem at any one stage and not according to pre-stored rules generated in a general manner to be of assistance for a wider variety of target problems.

It has been found that the system of the invention is particularly useful for automatic diagnosis of faults, in which inputs are often captured automatically by sensors. Any reduction in the required number of expensive feature value inputs in fault diagnosis and is of major benefit in view of the complex analysis operations required to obtain such values.

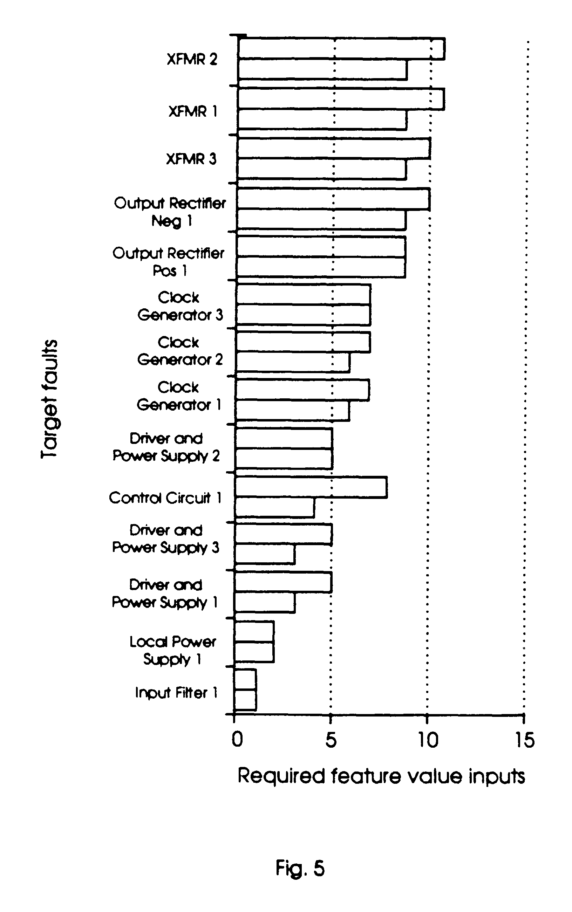

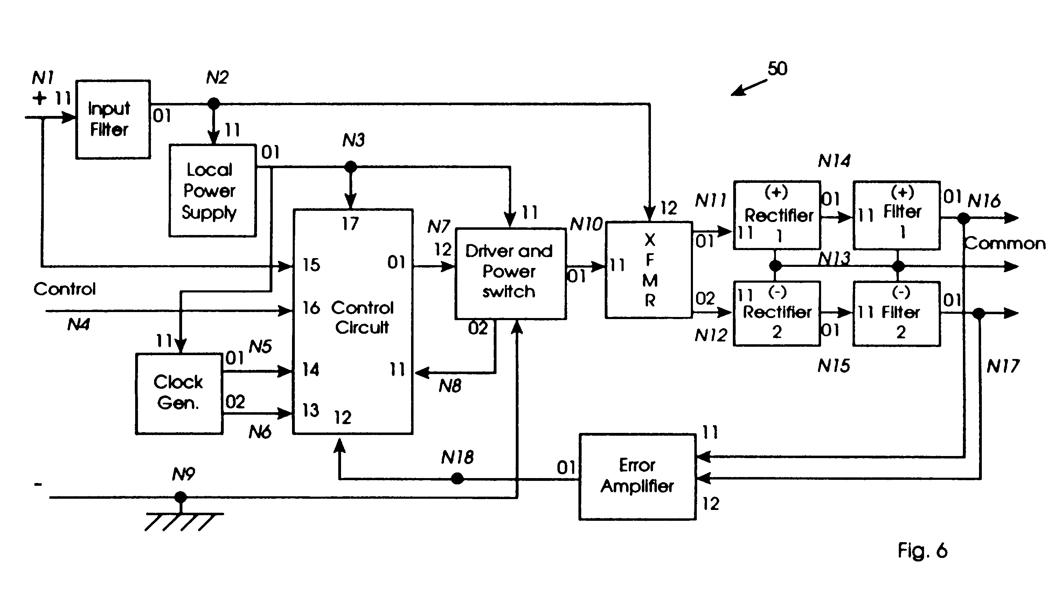

Fig. 5 represents a performance comparison between a system of the invention and an expert system of the prior art which uses a pre-stored decision structure. The systems were used to diagnose faults in a power supply circuit 50 shown in Fig. 6. The horizontal axis represents a number of feature value inputs, the vertical axis representing the faults. For each fault, the upper bar indicates the number of feature value inputs required for the prior art system, while the lower bar indicates the number for the system of the invention. While it is difficult to quantify performance of a case base system, these results do demonstrate that power inputs are generally required. In overview, only 83% of the inputs required by the prior art system were required by the system of the invention in these tests.

It will also be appreciated that the case base system of the invention 1 is extremely simple as simple data storage techniques are used in the case base and relatively simple processing operations are carried out. The most complex operations are the pattern matching operation and these are simplified by use of the various registers and the case record structures.

The invention is not limited to the embodiments hereinbefore described, but may be varied in construction and detail. For example, it is envisaged that different types of pattern matching operations may be used, the important point being that they determine the most discriminating feature of the candidate set and are carried out automatically. It is also envisaged that the case base include additional secondary table structures for retrieval of data.

## Claims

1. A case base system (1) comprising a case base (2) of stored case records (10) associated with cases, a processing means (4), and an interface (7) for communication with an external environment, characterised in that,

each case record (10) has a memory structure comprising an address (12), a set of feature values (13), and a solution (14);

said processing means (4) comprises means for automatically performing pattern matching operations between feature values and solutions of case records in a candidate set to determine a most discriminating feature for which the values correlate most closely with the solutions;

said processing means comprises means for :-

interactively transmitting feedback signals requesting the interface (7) to receive a value of said most discriminating feature (47);

receiving a value for said feature in a target problem from the interface, and

comparing the received value with values for said feature in the candidate set of case records to generate a next candidate (48) set of reduced size;

said processing means comprises means for repeating the automatic pattern matching (46) and the interactive feedback operations to generate a candidate set in which all case records have the same solution (44), and for retrieving one of said case records and outputting its solution at the interface (45).

2. A case base system as claimed in claim 1, wherein each case record includes at least one feature value addressable as a free feature value, and the processing means comprises a case filter (5) comprising means for:-

at the start of a case retrieval process, automatically directing the interface to receive values for free features (42); and

generating an initial candidate set of cases (43) by comparing received free feature values with the stored values in the case records and eliminating case records having incompatible free feature values.

3. A case base system as claimed in claim 2, wherein the case record free feature values are addressable as such by their location in memory cells which are pre-defined for that function.

4. A case base system as claimed in any preceding claim, wherein the processing means comprises means for including a case record in a candidate set if it has a non-specific value for a feature for which a value has been received at the interface, and is otherwise compatible.

5. A case base system as claimed in any preceding claim, wherein the solutions of all case records are at a similar level of granularity whereby they correlate directly with each other in target problems.

6. A case base system as claimed in any proceeding claim, wherein the case records are stored in a memory table structure, in which the record key is associated with the case address (12), the feature values (13), or the solution (14).

7. A case base system as claimed in claim 6, comprising a plurality of stored memory table structures, case records being common to a plurality of structures and having different keys in different structures.

8. A case base system as claimed in any preceding claim, wherein the processing means comprises means for setting up registers in memory and for directing storage in the registers of count values representing pattern matching correlations between solutions and feature values.

9. A case base system as claimed in claim 8, wherein the correlations are generated according to programs implementing information theoretic statistical algorithms, whereby case records are grouped according to common feature and solution characteristics.

10. An automatic fault diagnosis system comprising a case base system as claimed in any preceding claim and wherein the interface comprises a bank of automatic sensors and associated controllers.

11. A process for retrieving an appropriate case for a target problem from a case base system (1) comprising a case base (2) of stored case records (10), associated with cases, a processing means (4), and an interface (7) for communication with an external environment, each case record (10) having a memory structure comprising an address (12), a set of feature values (13), and a solution (14), the method comprising the steps of:-

the processing means (4) automatically performing pattern matching operations between feature values and solutions of case records in a candidate set to determine a most discriminating feature for which the values correlate most closely with the solutions;

the processing means interactively providing feedback by transmitting feedback signals requesting the interface (7) to receive a value in the target problem of said most discriminating feature (47), receiving a value for said feature from the interface, and comparing the received value with values for said feature in the candidate set of case records to generate a next candidate (48) set of reduced size;

said processing means repeating the automatic pattern matching (46) and the interactive feedback operations to generate a candidate set in which all case records have the same solution (44), retrieving one of said case records, and outputting its solution at the interface (45).

**12.** A process as claimed in claim 11, wherein each case record includes at least one feature value addressable as a free feature value, and the processing means initially carries out case filtering of the case base by carrying out the steps of:-

automatically directing the interface to receive values for free features; and

generating an initial candidate set of cases by comparing received free feature values with the stored values in the case records, and eliminating case records having incompatible free feature values.

**13.** A process as claimed in claim 12, wherein the case record free feature values are addressed by reading from memory cells which are pre-defined for that function.

**14.** A process as claimed in claims 11 or 12, wherein the interactive feedback step comprises the sub-step of comparing the received value with values in the candidate set of case records and generating a next candidate set of reduced size by including case records in the next candidate set if the case record has a non-specific value for said feature and is otherwise compatible.

**15.** A process as claimed in any of claims 11 to 14, wherein the solutions of all case records are at a similar level of granularity whereby they collate directly with each other in target problems.

**16.** A process as claimed in any of claims 11 to 15, wherein the case records are stored in a memory table structure in which the record key is associated with the case address, the feature values or the solution.

**17.** A process as claimed in any of claims 11 to 16, wherein there are a plurality of stored memory hash table structures, case records being common to a plurality of structures and having different keys in different structures.

**18.** A process as claimed in any of claims 11 to 17, wherein the automatic pattern matching step comprises the sub-steps of setting up registers in memory and directing storage in the registers of count values representing pattern matching correlations between solutions and feature values.

**19.** A process as claimed in claim 18, wherein the correlations are generated according to programs implementing information theoretic statistical algorithms, whereby case records are grouped according to common feature and solution characteristics.

**Patentansprüche**

**1.** Fallbasissystem (1), das eine Fallbasis (2) von gespeicherten Falldatensätzen (10), die mit Fällen verknüpft sind, ein Verarbeitungsmittel (4) und eine Schnittstelle (7) für Kommunikation mit einer externen Umgebung umfaßt, dadurch gekennzeichnet, daß

jeder Falldatensatz (10) eine Speicherstruktur aufweist, die eine Adresse (12), einen Satz von Merkmalswerten (13) und eine Lösung (14) umfaßt;

das genannte Verarbeitungsmittel (4) Mittel umfaßt zum automatischen Durchführen von Musteranpassungsoperationen zwischen Merkmalswerten und Lösungen von Falldatensätzen in einem Kandidatensatz zum Bestimmen eines am stärksten charakterisierenden Merkmals, für das die Werte am dichtesten mit den Lösungen übereinstimmen;

das genannte Verarbeitungsmittel Mittel umfaßt, um:

Rückkopplungssignale interaktiv zu übertragen, die die Schnittstelle (7) anweisen, einen Wert des genannten am stärksten charakterisierenden Merkmals (47) zu empfangen,

einen Wert für das genannte Merkmal in einem Zielproblem von der Schnittstelle zu empfangen, und

den empfangenen Wert mit Werten für das genannte Merkmal in dem Kandidatensatz von Falldatensätzen zu vergleichen, um einen nächstens Kandidaten (48)-Satz verringerter Größe zu erzeugen;

wobei das genannte Verarbeitungsmittel Mittel zum Wiederholen der automatischen Musteranpassungs-(46) und der interaktiven Rückkopplungsoperationen, um einen Kandidatensatz zu erzeugen, in dem alle Falldatensätze die gleiche Lösung (44) haben, und zum Auslesen eines der genannten Falldatensätze und Ausgeben seiner Lösung an der Schnittstelle (45) umfaßt.

2. Fallbasissystem wie in Anspruch 1 beansprucht, bei dem jeder Falldatensatz wenigstens einen Merkmalswert einschließt, der als ein freier Merkmalswert adressierbar ist, und das Verarbeitungsmittel einen Fallfilter (5) umfaßt, welcher Mittel aufweist, um:

zu Beginn eines Fallauslesevorgangs die Schnittstelle automatisch zu steuern, um Werte für freie Merkmale (42) zu empfangen; und

einen Anfangskandidatensatz von Fällen (43) durch Vergleichen empfangener freier Merkmalswerte mit den gespeicherten Werten in den Falldatensätzen zu erzeugen und Falldatensätze zu beseitigen, die nicht kompatible freie Merkmalswerte haben.

3. Fallbasissystem wie in Anspruch 2 beansprucht, bei dem die freien Merkmalswerte der Falldatensätze als solche durch ihre Position in Speicherzellen adressierbar sind, die für diese Funktion vordefiniert sind.

4. Fallbasissystem wie in einem vorhergehenden Anspruch beansprucht, bei dem das Verarbeitungsmittel Mittel zum Einschließen eines Falldatensatzes in einen Kandidatensatz umfaßt, wenn er einen nicht spezifischen Wert für ein Merkmal aufweist, für das ein Wert an der Schnittstelle empfangen worden ist, und ansonsten kompatibel it.

5. Fallbasissystem wie in einem vorhergehenden Anspruch beansprucht, bei dem die Lösungen aller Falldatensätze ein ähnliches Körnigkeitsniveau aufweisen, wodurch sie in Zielproblemen direkt miteinander in Korrelation stehen.

6. Fallbasissystem wie in einem vorhergehenden Anspruch beansprucht, bei dem die Falldatensätze in einer Speichertabellenstruktur gespeichert sind, in der der Datensatzschlüssel mit der Falladresse (12), den Merkmalswerten (13) oder der Lösung (14) verknüpft ist.

7. Fallbasissystem wie in Anspruch 6 beansprucht, das eine Vielzahl gespeicherter Speichertabellenstrukturen umfaßt, wobei Falldatensätze für eine Vielzahl von Strukturen gemeinsam sind und verschiedene Schlüssel in verschiedenen Strukturen aufweisen.

8. Fallbasissystem wie in einem vorhergehenden Anspruch beansprucht, bei dem das Verarbeitungsmittel Mittel zum Aufbauen von Registern im Speicher und zum Steuern von Speicherung von Zählungswerten in den Registern umfaßt, die Musteranpassungskorrelationen zwischen Lösungen und Merkmalswerten darstellen.

9. Fallbasissystem wie in Anspruch 8 beansprucht, bei dem die Korrelationen gemäß Programmen erzeugt werden, die theoretische statistische Informationsalgorithmen durchführen, wodurch Falldatensätze gemäß gemeinsamen Merkmals- und Lösungscharakteristiken gruppiert werden.

10. Automatisches Fehlerdiagnosesystem, das ein wie in einem vorhergehenden Anspruch beanspruchtes Fallbasissystem umfaßt, und bei dem die Schnittstelle einen Satz automatischer Sensoren und verknüpfter Controller aufweist.

11. Verfahren zum Auslesen eines passenden Falls für ein Zielproblem aus einem Fallbasissystem (1), welches eine Fallbasis (2) gespeicherter Falldatensätze (10), die mit Fällen verknüpft sind, ein Verarbeitungsmittel (4) und eine Schnittstelle (7) für Kommunikation mit einer äußeren Umgebung umfaßt, wobei jeder Falldatensatz (10) eine Speicherstruktur aufweist, die eine Adresse (12), einen Satz von Merkmalswerten (13) und eine Lösung (14) umfaßt, und das Verfahren die Schritte umfaßt:

automatisches Durchführen von Musteranpassungsoperationen zwischen Merkmalswerten und Lösungen von Falldatensätzen in einem Kandidatensatz durch das Verarbeitungsmittel (4), um ein am stärksten charakterisierendes Merkmal zu bestimmen, für das die Werte am dichtesten mit den Lösungen übereinstimmen;

interaktives Bereitstellen von Rückkoppelung durch Übertragen von Rückkopplungssignalen durch das Verarbeitungsmittel, die die Schnittstelle (7) anweisen, einen Wert in dem Zielproblem des am stärksten charakterisierenden Merkmals (47) zu empfangen, Empfangen eines Wertes für das genannte Merkmal von der Schnittstelle, und Vergleichen des empfangenen Wertes mit Werten für das genannte Merkmal in dem Kandidatensatz von Falldatensätzen, um einen nächsten Kandidaten (48)-Satz verringerter Größe zu erzeugen; wobei das genannte Verarbeitungsmittel die automatischen Musteranpassungs- (46) und interaktiven Rückkopplungsoperationen wiederholt, um einen Kandidatensatz zu erzeugen, in dem alle Falldatensätze die gleiche Lösung (44) haben, einen der genannten Falldatensätze ausliest, und seine Lösung an der Schnittstelle (45) ausgibt.

12. Verfahren wie in Anspruch 11 beansprucht, bei dem jeder Falldatensatz wenigstens einen Merkmalswert einschließt, der als ein freier Merkmalswert adressierbar ist, und das Verarbeitungsmittel zu Beginn Fallfilterung der Fallbasis durchführt, indem es die Schritte durchführt:

automatisches Steuern der Schnittstelle, um Werte für freie Merkmale zu empfangen; und

Erzeugen eines Anfangskandidatensatzes von Fällen durch Vergleichen empfangener freier Merkmalswerte mit den gespeicherten Werten in den Falldatensätzen, und Beseitigen von Falldatensätzen, die nicht kompatible freie Merkmalswerte aufweisen.

13. Verfahren wie in Anspruch 12 beansprucht, bei dem die freien Merkmalswerte von Falldatensätzen durch Lesen aus Speicherzellen adressiert werden, welche für diese Funktion vordefiniert sind.

14. Verfahren wie in den Ansprüchen 11 oder 12 beansprucht, bei dem der interaktive Rückkopplungsschritt den Unterschritt umfaßt, den empfangenen Wert mit Werten in dem Kandidatensatz von Falldatensätzen zu vergleichen und durch Einschließen von Falldatensätzen in den nächsten Kandidatensatz einen nächsten Kandidatensatz verringerter Größe zu erzeugen, wenn der Falldatensatz einen nicht spezifischen Wert für das genannte Merkmal aufweist und ansonsten kompatibel ist.

15. Verfahren wie in einem der Ansprüche 11 bis 14 beansprucht, bei dem die Lösungen aller Falldatensätze ein ähnliches Körnigkeitsniveau haben, wodurch sie in Zielproblemen direkt miteinander in Korrelation sind.

16. Verfahren wie in einem der Ansprüche 11 bis 15 beansprucht, bei dem die Falldatensätze in einer Speichertabellenstruktur gespeichert sind, in der der Datensatzschlüssel mit der Falladresse, den Merkmalswerten oder der Lösung verknüpft ist.

17. Verfahren wie in einem der Ansprüche 11 bis 16 beansprucht, bei dem eine Vielzahl gespeicherter Speichermischtabellenstrukturen vorhanden sind, wobei Falldatensätze für eine Vielzahl von Strukturen gemeinsam sind und verschiedene Schlüssel in verschiedenen Strukturen aufweisen.

18. Verfahren wie in einem der Ansprüche 11 bis 17 beansprucht, bei dem der automatische Musteranpassungsschritt die Unterschritte umfaßt, Register im Speicher aufzubauen und Speicherung von Zählungswerten in den Registern zu steuern, die Musteranpassungskorrelationen zwischen Lösungen und Merkmalswerten darstellen.

**19.** Verfahren wie in Anspruch 18 beansprucht, bei dem die Korrelationen gemäß Programmen erzeugt werden, die theoretische statistische Informationsalgorithmen durchführen, wodurch Falldatensätze gemäß gemeinsamen Merkmals- und Lösungscharakteristiken gruppiert werden.

**Revendications**

**1.** Système de base de cas (1) comprenant une base de cas (2) d'enregistrements de cas stockés (10) associés à des cas, un moyen de traitement (4) et une interface (7) pour communiquer avec un environnement externe, caractérisé en ce que :

chaque enregistrement de cas (10) a une structure de mémoire comprenant une adresse (12), un ensemble de valeurs de fonctions (13) et une solution (14) ;

ledit moyen de traitement (4) comprend un moyen pour effectuer automatiquement des opérations de mise en correspondance de configurations entre des valeurs de fonctions et des solutions d'enregistrements de cas dans un ensemble candidat en vue de déterminer la fonction la plus discriminatoire pour laquelle les valeurs correspondent le plus étroitement aux solutions ;

ledit moyen de traitement comprend des moyens pour :

transmettre interactivement des signaux de contre-réaction demandant à l'interface (7) de recevoir une valeur de ladite fonction la plus discriminatoire (47),

recevoir une valeur de ladite fonction dans un problème cible à partir de l'interface, et

comparer la valeur reçue à des valeurs de ladite fonction dans l'ensemble candidat d'enregistrements de cas en vue de générer un ensemble candidat suivant (48) de taille réduite ;

ledit moyen de traitement comprend un moyen pour répéter la mise en correspondance automatique de configurations (46) et les opérations de contre-réaction interactives en vue de générer un ensemble candidat dans lequel tous les enregistrements de cas ont la même solution (44), et pour extraire un desdits enregistrements de cas et produire sa solution au niveau de l'interface (45).

**2.** Système de base de cas selon la revendication 1, dans lequel chaque enregistrement de cas comporte au moins une valeur de fonction adressable comme valeur de fonction libre, et le moyen de traitement comprend un filtre de cas (5) comprenant un moyen pour :

au début d'un procédé d'extraction de cas, instruire automatiquement l'interface de recevoir des valeurs de fonctions libres (42) ; et

générer un ensemble candidat initial de cas (43) en comparant des valeurs de fonctions libres reçues aux valeurs stockées dans les enregistrements de cas et éliminer les enregistrements de cas ayant des valeurs de fonctions libres incompatibles.

**3.** Système de base de cas selon la revendication 2, dans lequel les valeurs de fonctions libres d'enregistrements de cas sont adressables en tant que telles par leur emplacement dans des cellules de mémoire qui sont prédéfinies pour cette fonction.

**4.** Système de base de cas selon l'une quelconque des revendications précédentes, dans lequel le moyen de traitement comprend un moyen pour inclure un enregistrement de cas dans un ensemble candidat s'il a une valeur non spécifique pour une fonction pour laquelle une valeur a été reçue au niveau de l'interface, et est autrement compatible.

**5.** Système de base de cas selon l'une quelconque des revendications précédentes, dans lequel les solutions de tous les enregistrements de cas sont à un niveau semblable de granularité si bien qu'elles correspondent direc-

EP 0 694 836 B1

tement l'une à l'autre dans les problèmes cibles.

6. Système de base de cas selon l'une quelconque des revendications précédentes, dans lequel les enregistrements de cas sont stockés dans une structure de table de mémoire, dans laquelle la clé d'enregistrement est associée à l'adresse de cas (12), aux valeurs de fonctions (13) ou à la solution (14).

7. Système de base de cas selon la revendication 6, comprenant une pluralité de structures de tables de mémoire stockées, les enregistrements de cas étant communs à une pluralité de structures et ayant des clés différentes dans des structures différentes.

8. Système de base de cas selon l'une quelconque des revendications précédentes, dans lequel le moyen de traitement comprend des moyens pour configurer des registres en mémoire et pour instruire le stockage dans les registres de valeurs de compte représentant des corrélations de correspondance de configurations entre les solutions et les valeurs de fonctions.

9. Système de base de cas selon la revendication 8, dans lequel les corrélations sont générées conformément à des programmes mettant en oeuvre des algorithmes statistiques théoriques informatiques, par lesquels les enregistrements de cas sont groupés conformément à des caractéristiques de fonction et de solution communes.

10. Système automatique de diagnostic de pannes comprenant un système de base de cas selon l'une quelconque des revendications précédentes et dans lequel l'interface comprend un bloc de capteurs automatiques et de contrôleurs associés.

11. Procédé pour extraire un cas approprié pour un problème cible à partir d'un système de base de cas (1) comprenant une base de cas (2) d'enregistrements de cas stockés (10), associés à des cas, un moyen de traitement (4) et une interface (7) pour communiquer avec un environnement externe, chaque enregistrement de cas (10) ayant une structure de mémoire comprenant une adresse (12), un ensemble de valeurs de fonction (13) et une solution (14), le procédé comprenant les étapes de :

exécution automatique par le moyen de traitement (4) d'opérations de mise en correspondance de configurations entre des valeurs de fonctions et des solutions d'enregistrements de cas dans un ensemble candidat en vue de déterminer la fonction la plus discriminatoire pour laquelle les valeurs correspondent le plus étroitement aux solutions ;

fourniture interactive de contre-réaction par ledit moyen de traitement par transmission de signaux de contre-réaction demandant à l'interface (7) de recevoir une valeur dans le problème cible de ladite fonction la plus discriminatoire (47), réception d'une valeur pour ladite fonction à partir de l'interface, et comparaison de la valeur reçue à des valeurs de ladite fonction dans l'ensemble candidat d'enregistrements de cas en vue de générer un ensemble candidat suivant (48) de taille réduite ;

par ledit moyen de traitement, répétition de la mise en correspondance automatique de configurations (46) et des opérations de contre-réaction interactives en vue de générer un ensemble candidat dans lequel tous les enregistrements de cas ont la même solution (44), extraction d'un desdits enregistrements de cas et production de sa solution au niveau de l'interface (45).

12. Procédé selon la revendication 11, dans lequel chaque enregistrement de cas comporte au moins une valeur de fonction adressable comme valeur de fonction libre, et le moyen de traitement effectue initialement un filtrage de cas de la base de cas en effectuant les étapes de :

instruction automatique de l'interface de recevoir des valeurs de fonctions libres ; et

génération d'un ensemble candidat initial de cas en comparant les valeurs de fonctions libres reçues aux valeurs stockées dans les enregistrements de cas et éliminant les enregistrements de cas ayant des valeurs de fonctions libres incompatibles.

13. Procédé selon la revendication 12, dans lequel les valeurs de fonctions libres d'enregistrements de cas sont adressées par lecture de cellules de mémoire qui sont prédéfinies pour cette fonction.

13

**14.** Procédé selon les revendications 11 ou 12, dans lequel l'étape de contre-réaction interactive comprend la sous-étape de comparaison de la valeur reçue à des valeurs dans l'ensemble candidat d'enregistrements de cas et de génération d'un ensemble candidat suivant de taille réduite en incluant des enregistrements de cas dans l'ensemble candidat suivant si l'enregistrement de cas a une valeur non spécifique pour ladite fonction et est autrement compatible.

**15.** Procédé selon l'une quelconque des revendications 11 à 14, dans lequel les solutions de tous les enregistrements de cas sont à un niveau semblable de granularité si bien qu'elles s'assemblent directement les unes aux autres dans les problèmes cibles.

**16.** Procédé selon l'une quelconque des revendications 11 à 15, dans lequel les enregistrements de cas sont stockés dans une structure de table de mémoire dans laquelle la clé d'enregistrement est associée à l'adresse de cas, aux valeurs de fonctions ou à la solution.

**17.** Procédé selon l'une quelconque des revendications 11 à 16, dans lequel il existe une pluralité de structures de tables de hachage de mémoire stockées, les enregistrements de cas étant communs à une pluralité de structures et ayant des clés différentes dans des structures différentes.

**18.** Procédé selon l'une quelconque des revendications 11 à 17, dans lequel l'étape de mise en correspondance automatique de configurations comprend les sous-étapes de configuration des registres en mémoire et d'instruction du stockage dans les registres de valeurs de compte représentant des corrélations de correspondance de configurations entre les solutions et les valeurs de fonctions.

**19.** Procédé selon la revendication 18, dans lequel les corrélations sont générées conformément à des programmes mettant en oeuvre des algorithmes statistiques théoriques informatiques, par lesquels les enregistrements de cas sont groupés conformément à des caractéristiques de fonction et de solution communes.

Fig. 1

10

Case Address　Free Feature 1　Free Feature 2　Free Feature n　Expensive Feature 1　Expensive Feature 2　Expensive Feature m　Solution

| | Value | Value | ···· | Value | Value | Value | ···· | Value | Value |

Free Features　　Expensive Features

←———— 2+n+m Memory Cells ————→

Fig. 2 (a)

Primary Case Record Structure

11

←———— 2+n+m Memory Cells ————→

k Cases (k Records)

Case 1

Case 2

Case 3

Case k-1

Case k

12

13

Fig. 2 (b)

14

## Secondary Table

Solution | Cases | 20

| | |
|---|---|
| Sol. 1 | Case 1,  Case 4,   Case 25, . . . . |
| Sol. 2 | |
| Sol. 3 | |
| Sol. p | |

21          22

**Fig. 3**

RFR = all expensive
features

RCR = all cases

RCR = cases matching
with free
feature values
received

CFR = most
discriminating
feature

CVR = value
of this
feature
for target

Update RCR

Determine
free
features — 41

Direct input
of free
feature values — 42

Generate
initial
candidate set — 43

Same Solution
? — 44

Output
solution
at interface — 45

Automatic
pattern
matching — 46

Input of value
for most
discriminating feature — 47

Generate next
candidate set — 48

Yes

No

40

Case
filtering

Automatic
operations

Interactive
operations

Fig. 4

Fig. 5

Fig. 6